# FASCICULE DE BREVET EUROPEEN

(11) **EP 0 465 356 B1**
(45) Date de publication et mention de la délivrance du brevet: **08.06.1994**
(21) Numéro de dépôt: 91401828.8
(22) Date de dépôt: 03.07.1991
(51) Int. Cl.: B29C 67/18, B44C 3/02, B44C 5/00

(54) **Procédé de décoration d'un objet en matière synthétique et objets obtenus par ce procédé**
Verfahren zur Dekoration eines aus synthetischem Material bestehenden Gegenstandes und nach diesem Verfahren hergestellter Gegenstände
Method for decoration of an object made of synthetic material and objects obtained by this method

(30) Priorité: 04.07.1990 FR 9008496
(43) Date de publication de la demande: 08.01.1992
(73) Titulaire: Société dite: LIR FRANCE(S.A.), F-94669 Chevilly-Larue (FR)
(72) Inventeur: Petit, Robert, F-94550 Chevilly-Larue (FR)
(74) Mandataire: Dawidowicz, Armand

(56) Documents cités:
- EP-A- 0 060 721
- GB-A- 1 300 580
- GB-A- 2 023 506
- GB-A- 2 209 495
- US-A- 2 651 079

## Description

La présente invention concerne les matières synthétiques, plus particulièrement utilisées pour la fabrication d'objets ayant un aspect esthétique avantageux. De tels objets peuvent être par exemple des boîtiers pour des produits cosmétiques, des parfums, etc.

L'aspect de tels objets est en général donné par des traitements de surface traditionnels tels qu'impression, dépôt, etc. Il est difficile de donner à de tels objets des aspects de reliefs intérieurs, en particulier de créer des reliefs accrochant la lumière.

La présente invention vise à fournir un nouveau procédé permettant d'obtenir, de manière simple et économique, des objets du type précédent ayant un aspect extrêmement nouveau et attractif, avec des variations pratiquement infinies.

A cet effet, l'invention a pour objet un procédé de fabrication d'objets en matière synthétique d'aspect attractif, caractérisé en ce qu'on moule une couche de matière synthétique de teinte foncée avec des reliefs localisés sur une face et on surmoule sur ladite face une seconde couche extérieure de matière synthétique translucide ou transparente plus claire.

Les reliefs constitués de la matière foncée assurent une densification de la couleur et procurent ainsi un aspect extrêmement nouveau et attractif.

Les reliefs peuvent avoir la forme la plus variée telle que tronconique, conique, tronpyramidale, semi-ovoïdale, etc., avec des écartements entre reliefs plus ou moins grands. Ils peuvent aussi représenter des motifs tels que fleur, personnage, sigle, etc.

Selon une forme de mise en oeuvre, on dispose sur tout ou partie de ladite surface, avant le surmoulage, un film translucide ou opaque. On peut ainsi obtenir des effets très variés et nouveaux.

L'invention concerne également les objets obtenus par le procédé précédent.

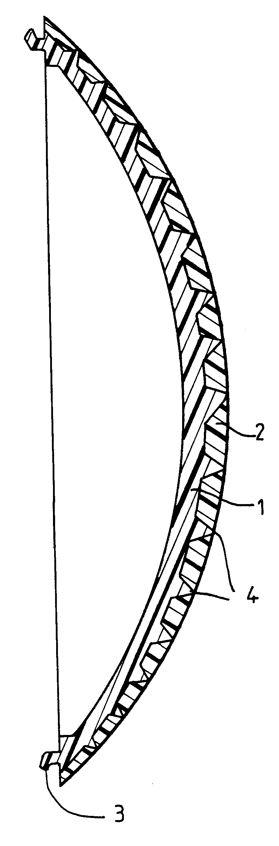

L'invention sera bien comprise à la lecture de la description suivante faite en se référant au dessin annexé dont la figure unique représente une coupe à travers un objet selon un exemple de réalisation de l'invention.

Dans l'exemple représenté, l'objet est un cabochon constitué d'une couche de base 1 en matière synthétique opaque ou translucide de couleur foncée sur laquelle est surmoulée une couche extérieure 2 en matière synthétique transparente ou translucide de couleur claire. La couche de base peut si nécessaire comporter des pattes d'encliquetage 3. Conformément à l'invention, la face de la couche de base 1 sur laquelle est surmoulée la couche 2 est munie de reliefs 4. Ces reliefs 4 peuvent avoir une forme quelconque, conique (comme dans l'exemple représenté), pyramidale, tronconique, tronpyramidale, semi-ovoïdale, etc. Les reliefs 4 peuvent être alignés selon un quadrillage ou être disposés en quinconce ou selon toute autre disposition souhaitée.

Le sommet des reliefs 4 peut, comme dans l'exemple représenté, affleurer à la surface libre de la couche 2 ou bien, au contraire, être écarté intérieurement de cette surface libre.

Les reliefs 4, vus à travers la couche 2 plus claire, produisent un effet de densification de la couche plus sombre 1 et, en conséquence, un effet optique très esthétique.

Eventuellement, la face de la couche 1 recevant la couche 2 peut, avant le surmoulage, être recouverte partiellement ou totalement par un film translucide ou opaque, éventuellement réfléchissant. On accentue ainsi la réflexion lumineuse sur les reliefs 4. Le film peut être décoré par un procédé quelconque ou ne pas être décoré.

L'objet selon l'invention peut être rapporté sur un ensemble, comme le cabochon représenté au dessin. Il peut au contraire constituer lui-même une partie d'un ensemble, tel qu'un couvercle de boîtier ou pot ou flacon pour produits cosmétiques ou pour parfums.

## Revendications

1. Procédé de fabrication d'objets en matière synthétique d'aspect attractif,
caractérisé en ce qu'on moule une couche (1) de matière synthétique de teinte foncée avec des reliefs (4) localisés sur une face et on surmoule sur ladite face, une seconde couche (2) extérieure de matière synthétique translucide ou transparente plus claire.

2. Procédé selon la revendication 1,
caractérisé en ce que lesdits reliefs (4) sont de forme tronconique, conique, tronpyramidale, semi-ovoïdale, avec des écartements entre reliefs plus ou moins grands.

3. Procédé selon la revendication 1,
caractérisé en ce que lesdits reliefs (4) représentent un motif tel que fleur, personnage, sigle.

4. Procédé selon l'une des revendications 1 à 3,
caractérisé en ce que les reliefs (4) sont disposés alignés selon un quadrillage.

5. Procédé selon l'une des revendications 1 à 3,
caractérisé en ce que les reliefs (4) sont disposés en quinconce.

6. Procédé selon l'une des revendications 1 à 3,
caractérisé en ce que les reliefs (4) sont disposés selon des courbes telles que des cercles.

7. Procédé selon l'une des revendications 1 à 6,
caractérisé en ce que les sommets desdits reliefs (4) affleurent à la surface libre de la seconde couche (2).

8. Procédé selon l'une des revendications 1 à 6,
caractérisé en ce que les sommets desdits reliefs (4), sont écartés intérieurement de la surface libre de la seconde couche (2).

9. Procédé selon l'une des revendications 1 à 6,
caractérisé en ce qu'on dispose sur tout ou partie de ladite surface, avant le surmoulage, un film translucide ou opaque, décoré par un procédé quelconque ou non décoré.

10. Objet en matière synthétique d'aspect attractif, tel que cabochon ou boîtier, fabriqué par le procédé selon l'une des revendications 1 à 9,
caractérisé en ce qu'il comprend une couche intérieure moulée (1) en matière synthétique de couleur foncée munie de reliefs (4) sur une face, ladite face étant recouverte par surmoulage par une couche (2) de matière synthétique translucide ou transparente plus claire.

11. Objet selon la revendication 10,
caractérisé en ce que les reliefs (4) sont de forme tronconique, conique, tronpyramidale, semi-ovoïdale, avec des écartements entre reliefs plus ou moins grands.

12. Objet selon la revendication 10,
caractérisé en ce que lesdits reliefs (4) représentent un motif tel que fleur, personnage, sigle.

13. Objet selon l'une des revendications 10 à 12,
caractérisé en ce que les reliefs (4) sont disposés alignés selon un quadrillage.

14. Objet selon l'une des revendications 10 à 12,
caractérisé en ce que les reliefs (4) sont disposés en quinconce.

15. Objet selon l'une des revendications 10 à 12,
caractérisé en ce que les reliefs (4) sont disposés selon des courbes telles que des cercles.

16. Objet selon l'une des revendications 10 à 15,
caractérisé en ce que les sommets desdits reliefs (4) affleurent à la surface libre de la seconde couche (2).

17. Objet selon l'une des revendications 10 à 15,
caractérisé en ce que les sommets desdits reliefs sont écartés intérieurement de la surface libre de la seconde couche (2).

18. Objet selon l'une des revendications 10 à 17,
caractérisé en ce qu'il comprend un film translucide ou opaque disposé sur tout ou partie de ladite face, décoré par un procédé quelconque ou non décoré.

## Patentansprüche

1. Verfahren zur Herstellung von Gegenständen aus Kunststoff ansprechenden Aussehens,
**dadurch gekennzeichnet,** daß man eine Schicht (1) aus Kunststoff dunkler Farbe mit Erhebungen (4), die an einer Seite angeordnet sind, bildet und daß man auf der genannten Seite eine zweite, äußere Schicht (2) aus durchscheinendem oder lichtdurchlässigem Kunst- stoff hellerer Farbe bildet.

2. Verfahren nach Anspruch 1,
**dadurch gekennzeichnet,** daß genannte Erhebungen (4) von kegelstumpfförmiger, kegeliger, pyramidenstumpfförmiger, halbeiförmiger Gestalt sind mit mehr oder weniger großen Abständen zwischen den Erhebungen.

3. Verfahren nach Anspruch 1,
**dadurch gekennzeichnet,** daß genannte Erhebungen (4) ein Motiv darstellen, beispielsweise Blumen, Personen, Kürzel.

4. Verfahren nach einem der Ansprüche 1 bis 3,
**dadurch gekennzeichnet,** daß die Erhebungen (4) entlang eines quadratischen Liniennetzes ausgerichtet angeordnet sind.

5. Verfahren nach einem der Ansprüche 1 bis 3,
**dadurch gekennzeichnet,** daß die Erhebungen (4) schachbrettförmig angeordnet sind.

6. Verfahren nach einem der Ansprüche 1 bis 3,
**dadurch gekennzeichnet,** daß die Erhebungen (4) entlang Krümmungen, beispielsweise Kreislinien, angeordnet sind.

7. Verfahren nach einem der Ansprüche 1 bis 6,
**dadurch gekennzeichnet,** daß die Scheitelpunkte genannter Erhebungen (4) auf Höhe der freien Oberfläche der zweiten Schicht (2) liegen.

8. Verfahren nach einem der Ansprüche 1 bis 6,
**dadurch gekennzeichnet,** daß die Scheitelpunkte genannter Erhebungen (4) sich innerhalb entfernt von der freien Oberfläche der zweiten Schicht (2) befinden.

9. Verfahren nach einem der Ansprüche 1 bis 6,
**dadurch gekennzeichnet,** daß man über der gesamten oder einem Teil genannter Oberfläche vor dem Beschichten einen durchscheinenden oder lichtundurchlässigen Film anordnet, der nicht verziert oder mittels irgendeines Verfahrens verziert ist.

10. Gegenstand aus Kunststoff ansprechenden Aussehens, beispielsweise eine Zierleiste oder ein Gehäuse, der mittels des Verfahrens nach einem der Ansprüche 1 bis 9 hergestellt ist,
**dadurch gekennzeichnet,** daß er eine innere geformte Schicht (1) aus Kunststoff dunkler Farbe aufweist, die an einer Seite mit Erhebungen (4) versehen ist, wobei genannte Seite durch Beschichten bedeckt ist durch eine Schicht (2) aus durchscheinendem oder lichtdurchlässigem Kunststoff hellerer Farbe.

11. Gegenstand nach Anspruch 10, **dadurch gekennzeichnet,** daß die Erhebungen (4) von kegelstumpfförmiger, kegeliger, pyramidenstumpfförmiger, halbeiförmiger Gestalt sind mit mehr oder weniger großen Abständen zwischen den Erhebungen.

12. Gegenstand nach Anspruch 10,
**dadurch gekennzeichnet,** daß genannte Erhebungen (4) ein Motiv darstellen, beispielsweise Blumen, Personen, Kürzel.

13. Gegenstand nach einem der Ansprüche 10 bis 12,
**dadurch gekennzeichnet,** daß die Erhebungen (4) entlang eines quadratischen Liniennetzes ausgerichtet angeordnet sind.

14. Gegenstand nach einem der Ansprüche 10 bis 12,
**dadurch gekennzeichnet,** daß die Erhebungen (4) schach**-** brettförmig angeordnet sind.

15. Gegenstand nach einem der Ansprüche 10 bis 12,
**dadurch gekennzeichnet,** daß die Erhebungen (4) entlang Krümmungen, beispielsweise Kreislinien, angeordnet sind.

16. Gegenstand nach einem der Ansprüche 10 bis 15,
**dadurch gekennzeichnet,** daß die Scheitelpunkte genannter Erhebungen (4) auf Höhe der freien Oberfläche der zweiten Schicht (2) liegen.

17. Gegenstand nach einem der Ansprüche 10 bis 15,
**dadurch gekennzeichnet,** daß die Scheitelpunkte genannter Erhebungen sich innerhalb entfernt von der freien Oberfläche der zweiten Schicht (2) befinden.

18. Gegenstand nach einem der Ansprüche 10 bis 17,
**dadurch gekennzeichnet,** daß er einen durchscheinenden oder lichtundurchlässigen Film aufweist, der nicht verziert oder mittels irgendeines Verfahrens verziert ist und über der gesamten oder einem Teil der genannten Seite angeordnet ist.

## Claims

1. Process for manufacturing objects made of synthetic material and having an attractive appearance, characterised in that a layer (1) of dark-coloured synthetic material is moulded with localised reliefs (4) on one face, and a second, outer layer (2) of lighter-coloured translucent or transparent material is moulded onto the said face.

2. Process according to Claim 1, characterised in that the said reliefs (4) are in the shape of a truncated cone, conical, in the shape of a truncated pyramid or semi-ovoid in shape, with greater or lesser distances between the reliefs.

3. Process according to Claim 1, characterised in that the said reliefs (4) represent a pattern such as a flower, a person or a set of initials.

4. Process according to one of Claims 1 to 3, characterised in that the reliefs (4) are disposed so as to be aligned in a square pattern.

5. Process according to one of Claims 1 to 3, characterised in that the reliefs (4) are disposed in staggered rows.

6. Process according to one of Claims 1 to 3, characterised in that the reliefs (4) are disposed in curves such as circles.

7. Process according to one of Claims 1 to 6, characterised in that the tops of the said reliefs (4) are flush with the free surface of the second layer (2).

8. Process according to one of Claims 1 to 6, characterised in that the tops of the said reliefs (4) are internally distant from the free surface of the second layer (2).

9. Process according to one of Claims 1 to 6, characterised in that a translucent or opaque film, decorated by any process or undecorated, is disposed on all or part of the said surface, before the second moulding.

10. Object made of synthetic material having an attractive appearance, such as a cap or box, made by the process according to one of Claims 1 to 9, characterised in that it comprises a moulded inner layer (1) made of dark-coloured synthetic material provided with reliefs (4) on one face, the said face being covered by a layer (2) of lighter-coloured translucent or transparent synthetic material moulded on top.

11. Object according to Claim 10, characterised in that the reliefs (4) are in the shape of a truncated cone, conical, in the shape of a truncated pyramid or semi-ovoid, with greater or lesser distances between the reliefs.

12. Object according to Claim 10, characterised in that the said reliefs (4) represent a pattern such as a flower, a person or a set of initials.

13. Object according to one of Claims 10 to 12, characterised in that the reliefs (4) are disposed so as to be aligned in a square pattern.

14. Object according to one of Claims 10 to 12, characterised in that the reliefs (4) are disposed in staggered rows.

15. Object according to one of Claims 10 to 12, characterised in that the reliefs (4) are disposed in curves such as circles.

16. Object according to one of Claims 10 to 15, characterised in that the tops of the said reliefs (4) are flush with the free surface of the second layer (2).

17. Object according to one of Claims 10 to 15, characterised in that the tops of the said reliefs are internally distant from the free surface of the second layer (2).

18. Object according to one of Claims 10 to 17, characterised in that it comprises a translucent or opaque film disposed on all or part of the said face, and which has been decorated by any process or is undecorated.
